# EUROPÄISCHE PATENTANMELDUNG

(11) **EP 1 244 193 A2**
(43) Veröffentlichungstag der Anmeldung: **25.09.2002**
(21) Anmeldenummer: 02006103.2
(22) Anmeldetag: 19.03.2002
(51) Int. Cl.: H02J 9/06, H02J 3/18

(54) **Einrichtung zur unterbrechungsfreien Stromversorgung und zur Aktivfilterung**

(30) Priorität: 24.03.2001 DE 10114570
(71) Anmelder: ABB Research Ltd., 8050 Zürich (CH)
(72) Erfinder: Diwes, Andreas, 69214 Eppelheim (DE)
(74) Vertreter: Miller, Toivo

(57) **Zusammenfassung**

Die Erfindung bezieht sich auf eine Einrichtung zur unterbrechungsfreien Stromversorgung von elektrischen Lasten (L) und zur Aktivfilterung, wobei die Lasten (L) an einem Wechselspannungs-Teilnetz (N2) angeschlossen sind, das mittels eines Schalters (S) und über eine dazu in Reihe geschaltete Primärwicklung (PW) eines Ankoppeltransformators (T) mit einem speisenden Wechselspannungsnetz (N1) verbunden ist. Am Wechselspannungs-Teilnetz (N2) ist an einem Anschlusspunkt (A) zwischen dem Schalter (S) und der Primärwicklung (PW) des Ankoppeltransformators (T) die Wechselspannungsseite eines ersten Stromrichters (SR_{PAR}) netzparallel angeschlossen. An der Sekundärwicklung (SW) des Ankoppeltransformators (T) ist ein zweiter Stromrichter (SR_{SER}) mit seiner Wechselspannungsseite angeschlossen. Die beiden Stromrichter (SR_{PAR}, SR_{SER}) sind gleichspannungsseitig an einem Gleichspannungszwischenkreis (G) angeschlossen. An die Stromrichter (SR_{PAR}, SR_{SER}) sind gleichspannungsseitig wenigstens ein Energiespeicher (ES) und/oder wenigstens ein Energieerzeuger (EE) angeschlossen.

## Beschreibung

Die Erfindung bezieht sich auf eine Einrichtung zur unterbrechungsfreien Stromversorgung von elektrischen Lasten und zur Aktivfilterung.

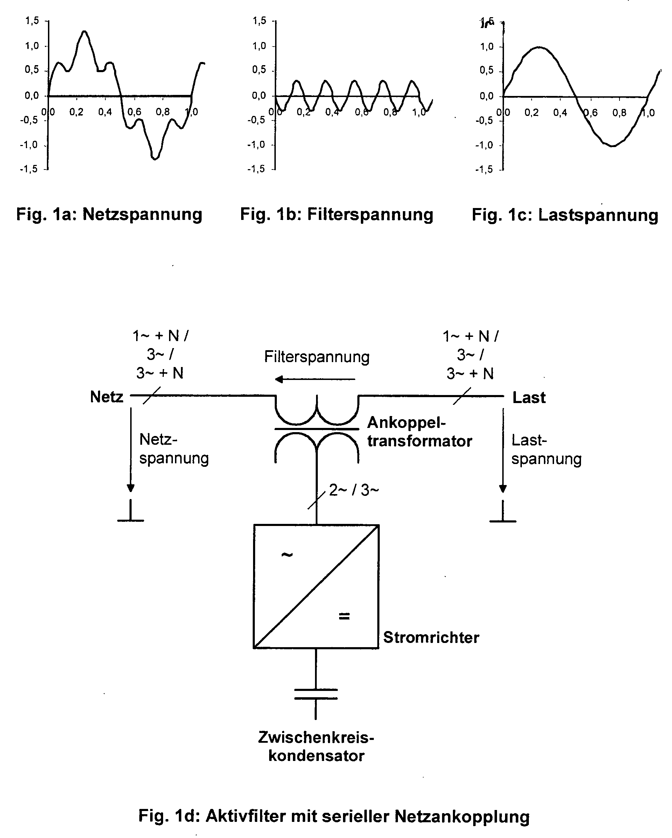

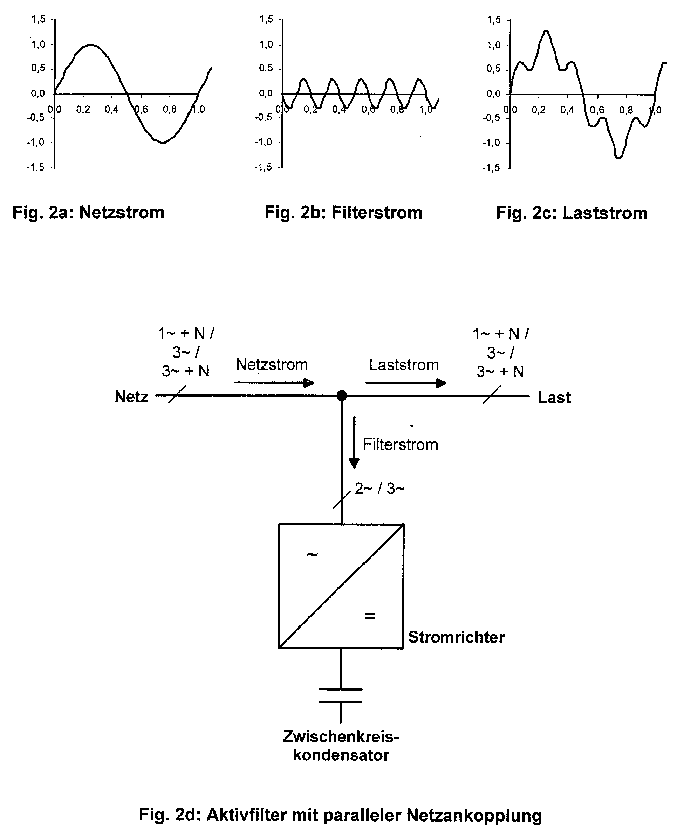

Mit dem Einsatz als unterbrechungsfreie Stromversorgung und zur Aktivfilterung sind zwei unterschiedliche Anwendungen von Stromrichtern mit Gleichspannungs-Zwischenkreis in Niederspannungs-Wechselstromnetzen bekannt, nämlich:
a) Einsatz von Stromrichtern als seriell oder parallel im Wechselstromnetz betriebene aktive Filter. Die aktiven Filter filtern dabei Störungen im Netz heraus, indem sie die von der gewünschten Strom- bzw. Spannungsform abweichenden Störanteile negativ in das Netz einspeisen. Dadurch addieren sich die Störanteile mit den vom Stromrichter überlagerten Strömen/Spannungen zu Null. Dieses bekannte Filterprinzip ist in den Figuren 1a, 1b, 1c und 1d, sowie in den Figuren 2a, 2b, 2c und 2d dargestellt.
   Die Figuren 1a bis 1d zeigen das Prinzip eines seriellen Aktivfilters. Dabei wird die Kurvenform der Lastspannung verändert. Dies geschieht, indem in Reihe zur in Fig. 1a gezeigten Netzspannung eine zusätzliche, in Fig. 1b gezeigte Filterspannung geschaltet wird. Die in Fig. 1c dargestellte Lastspannung ist somit gleich der Summe der - in diesem Falle Oberschwingungs-behafteten - Netzspannung und der Filterspannung. Durch eine geeignete Regelung der Filterspannung werden Abweichungen der Netzspannung vom Sollwert, z.B. eine sinusförmige Wechselspannung mit einer Frequenz von 50 Hz kompensiert. Fig. 1d zeigt eine mögliche Anordnung eines seriellen Aktivfilters mit Netzankopplung über einen Transformator, dessen Primärwicklung in Reihe zur Netzspannung geschaltet ist.
   Die Figuren 2a bis 2d zeigen das Prinzip eines parallelen Aktivfilters. Dabei wird die Kurvenform des Laststromes verändert. Dies geschieht, indem zum in Fig. 2c beispielhaft gezeigten Laststrom ein in Fig. 2b gezeigter zusätzlicher Filterstrom addiert wird. Der in Fig. 2a gezeigte Strom, der dem Netz entnommen wird, ist somit gleich der Summe des - in diesem Falle Oberschwingungs-behafteten - Laststroms und dem Filterstrom. Durch eine geeignete Regelung des Filterstroms werden Abweichungen des Laststroms vom Sollwert, z.B. ein sinusförmiger Wechselstrom mit einer Frequenz von 50 Hz und einem Leistungsfaktor von 1, kompensiert. Fig. 2d zeigt eine mögliche Anordnung eines bekannten parallelen Aktivfilters.
b) Einsatz von Stromrichtern in Unterbrechungsfreien Stromversorgungsanlagen (USV). Bei sog. "netz-interaktiven" ("line-interactive") USV-Anlagen gemäß dem Standard ENV 50091-3 arbeitet ein Stromrichter netzparallel. Bei intaktem Wechselstromnetz wird über den Stromrichter der Energiespeicher im Gleichspannungszwischenkreis geladen. Im Netzfehlerfall erzeugt der Stromrichter die Wechselspannung zur Versorgung der USV-Last. Bei sog. "Doppelwandler-" ("double conversion") USV-Anlagen gemäß ENV 50091-3 wird über einen Gleichrichter eine Gleichspannung erzeugt, die dann von einem Stromrichter in eine Wechselspannung zur Versorgung der zu schützenden USV-Lasten gewandelt wird. Beide USV-Typen verfügen über einen Energiespeicher und optional über einen Energieerzeuger im Gleichspannungszwischenkreis, aus denen im Netzfehlerfall die Energie zur Versorgung der Last entnommen wird.

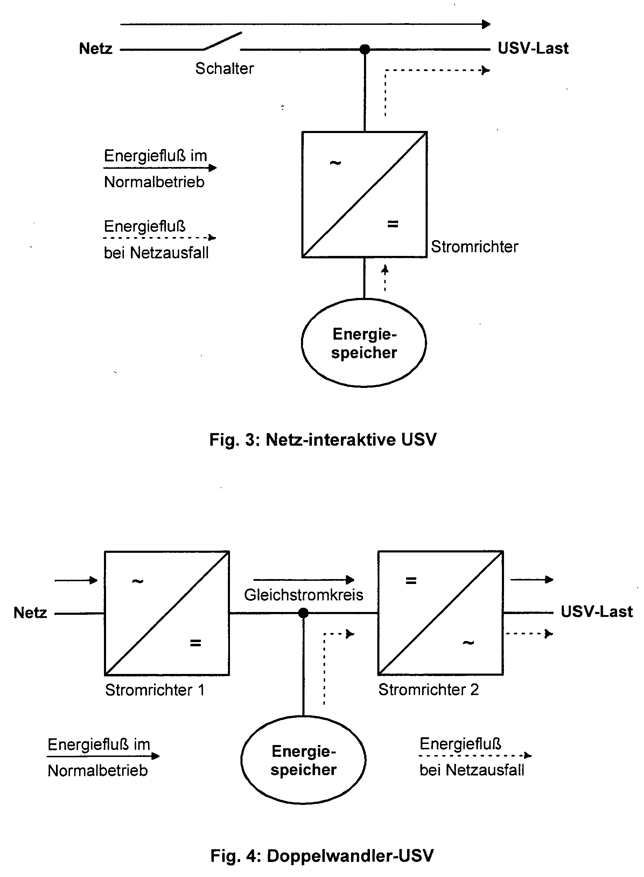

Fig. 3 zeigt die bekannte Anordnung einer netzinteraktiven USV. Im Normalbetrieb - bei intaktem Netz - ist der Schalter geschlossen und die USV-Last wird vom Netz mit Energie versorgt. Gleichzeitig wird der Energiespeicher der USV über den Stromrichter geladen (nicht dargestellt). Tritt ein Fehler im Netz oder eine unzulässige Abweichung der Netzspannung vom Sollwert auf, wird der Schalter geöffnet. Die USV-Last wird dann über den Stromrichter aus dem Energiespeicher versorgt. Sobald die Netzspannung wieder zulässige Werte hat, wird der Schalter geschlossen und die USV-Last wird wieder aus dem Netz versorgt.

Fig. 4 zeigt die bekannte Anordnung einer Doppelwandler-USV. Die Last wird immer über Stromrichter 2 aus dem Gleichstromkreis versorgt. Im Normalbetrieb - bei intaktem Netz - wird der Gleichstromkreis vom Netz über den Stromrichter 1 versorgt. Gleichzeitig wird der Energiespeicher, der am Gleichstromkreis angeschlossen ist, über Stromrichter 1 aus dem Netz geladen (nicht dargestellt). Tritt ein Fehler im Netz auf und der Stromrichter 1 ist nicht mehr in der Lage, den Stromrichter 2 über den Gleichstromkreis zu versorgen, wird der Gleichstromkreis aus dem Energiespeicher versorgt. Sobald Stromrichter 1 wieder in der Lage ist, den Gleichstromkreis aus dem Netz zu versorgen, übernimmt er diese Funktion und der Energiespeicher wird wieder geladen.

Aktivfilter können allerdings auf Grund Ihrer Regelungscharakteristik, der fehlenden Netztrennstelle und dem Fehlen eines ausreichend großen Energiespeichers im Gleichspannungszwischenkreis im Fehlerfall die Last nicht versorgen.

Netz-interaktive USV-Anlagen haben andererseits keine Möglichkeit, die Lastspannung zu beeinflussen, solange sie parallel zum Netz arbeiten. Die Störungen der Netzspannung (Amplitude der Wechselspannung, Spannungsform) können nicht von der USV-Last abgekoppelt werden. Nur im Netz-Fehlerfall können sie die Qualität der Versorgungsspannung (Spannungshöhe, Verzerrung der Spannungsform) beeinflussen.

Nachteilig ist außerdem, daß bei Doppelwandler-USV-Anlagen die gesamte Energie zur Versorgung der USV-Last zweimal umgewandelt wird. Zunächst von Wechselstrom in Gleichstrom, dann wieder von Gleichstrom in Wechselstrom. Daraus resultiert ein schlechter Wirkungsgrad, verglichen mit einer Netz-interaktiven USV-Anlage.

Davon ausgehend liegt der Erfindung die Aufgabe zugrunde, eine Einrichtung anzugeben, mit der eine Kombination von Aktivfilterung und unterbrechungsfreier Stromversorgung erreicht wird, und dabei die Nachteile der vorgenannten Anordnungen vermieden werden.

Diese Aufgabe wird durch eine Einrichtung zur unterbrechungsfreien Stromversorgung von elektrischen Lasten und zur Aktivfilterung gelöst, die die im Anspruch 1 angegebenen Merkmale aufweist. Vorteilhafte Ausgestaltungen sind in weiteren Ansprüchen angegeben.

Mit der Erfindung wird demnach im wesentlichen vorgeschlagen, Lasten an einem Wechselspannungs-Teilnetz anzuschließen, das mittels eines Schalters und über eine dazu in Reihe geschaltete Primärwicklung eines Ankoppeltransformators mit einem speisenden Wechselspannungsnetz verbunden ist, wobei am Wechselspannungs-Teilnetz an einem Anschlusspunkt zwischen dem Schalter und der Primärwicklung des Ankoppeltransformators die Wechselspannungsseite eines ersten Stromrichters netzparallel angeschlossen ist, an der Sekundärwicklung des Ankoppeltransformators ein zweiter Stromrichter mit seiner Wechselspannungsseite angeschlossen ist, die beiden Stromrichter gleichspannungsseitig an einem Gleichspannungszwischenkreis angeschlossen sind, und an die Stromrichter gleichspannungsseitig wenigstens ein Energiespeicher und/oder wenigstens ein Energieerzeuger angeschlossen sind.

Eine weitere Beschreibung der Erfindung und deren Vorteile erfolgt nachstehend anhand eines in Zeichnungsfiguren dargestellten Ausführungsbeispiels.

Es zeigt:
- Fig. 1a - 1d: Prinzipdarstellungen zum bekannten Aktivfilter mit serieller Netzankopplung,
- Fig. 2a - 2d: Prinzipdarstellungen zum bekannten Aktivfilter mit paralleler Netzankopplung,
- Fig. 3: eine bekannte Netz-interaktive USV
- Fig. 4: eine bekannte Doppelwandler-USV,
- Fig. 5: eine Prinzipdarstellung zur erfindungsgemäßen Einrichtung zur Filterung und unterbrechungsfreien Stromversorgung, und
- Fig. 6: das Regelungsprinzip zur Anordnung gemäß Fig. 5.

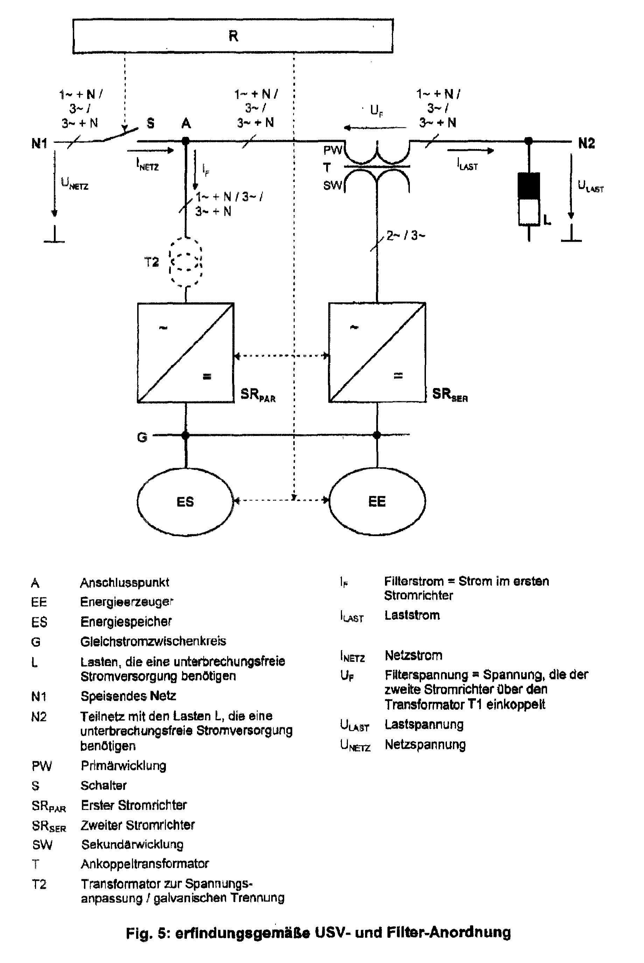

Fig. 5 zeigt eine erfindungsgemäße Anordnung mit USV- und Filterfunktion. Dabei sind Lasten L an einem Wechselspannungs-Teilnetz N2 angeschlossen, das mittels eines Schalters S, der ein mechanischer Schalter oder ein Halbleiter-Schalter sein kann, und über eine dazu in Reihe geschaltete Primärwicklung PW eines Ankoppeltransformators T mit einem speisenden Wechselspannungsnetz N1 verbunden. Am Wechselspannungs-Teilnetz N2 ist an einem Anschlusspunkt A zwischen dem Schalter S und der Primärwicklung PW des Ankoppeltransformators T die Wechselspannungsseite eines ersten Stromrichters SR_{PAR} netzparallel angeschlossen. An der Sekundärwicklung SW des Ankoppeltransformators T ist ein zweiter Stromrichter SR_{SER} mit seiner Wechselspannungsseite angeschlossen. Die beiden Stromrichter SR_{PAR}, SR_{SER} sind gleichspannungsseitig an einem Gleichspannungszwischenkreis G angeschlossen und dadurch parallelgeschaltet. An die Stromrichter SR_{PAR}, SR_{SER} sind im dargestellten Beispiel gleichspannungsseitig ein Energiespeicher ES und ein Energieerzeuger EE angeschlossen. Prinzipiell ist wenigstens ein Energiespeicher ES oder ein Energieerzeuger EE erforderlich.

Bei intaktem speisenden Wechselspannungsnetz N1, d.h. die Netzspannung liegt innerhalb definierter Grenzen, ist der Schalter S geschlossen und das Teilnetz N2 wird über die in Reihe zur Netzspannung geschaltete Primärwicklung PW des Ankopplungstransformators T aus dem speisenden Netz N1 versorgt. Der erste Stromrichter SR_{PAR} übernimmt durch eine geeignete Regelung mittels einer Regeleinrichtung R die Funktion eines parallelen Aktivfilters. Gleichzeitig wird der Energiespeicher ES des Gleichstromzwischenkreises G über den ersten Stromrichter SR_{PAR} geladen. Der zweite Stromrichter SR_{SER} übernimmt durch eine geeignete Regelung die Funktion eines seriellen Aktivfilters.

Tritt ein Fehler im Netz N1 oder eine unzulässige Abweichung der Netzspannung vom Sollwert auf, wird der Schalter S geöffnet. Das Teilnetz N2 wird dann über den ersten Stromrichter SR_{PAR} aus dem Gleichstromzwischenkreis G versorgt. Der Gleichstromzwischenkreis G wiederum wird vom Energiespeicher ES und/oder vom elektrischen Energieerzeuger EE versorgt.

Sobald die Netzspannung wieder zulässige Werte hat, wird der Schalter S geschlossen und das Teilnetz N2 wird wieder aus dem speisenden Netz N1 versorgt.

Der erste Stromrichter SR_{PAR} kann wahlweise direkt oder mittels eines Transformators T2 zur Spannungsanpassung und galvanischen Trennung am Netz angeschlossen sein.

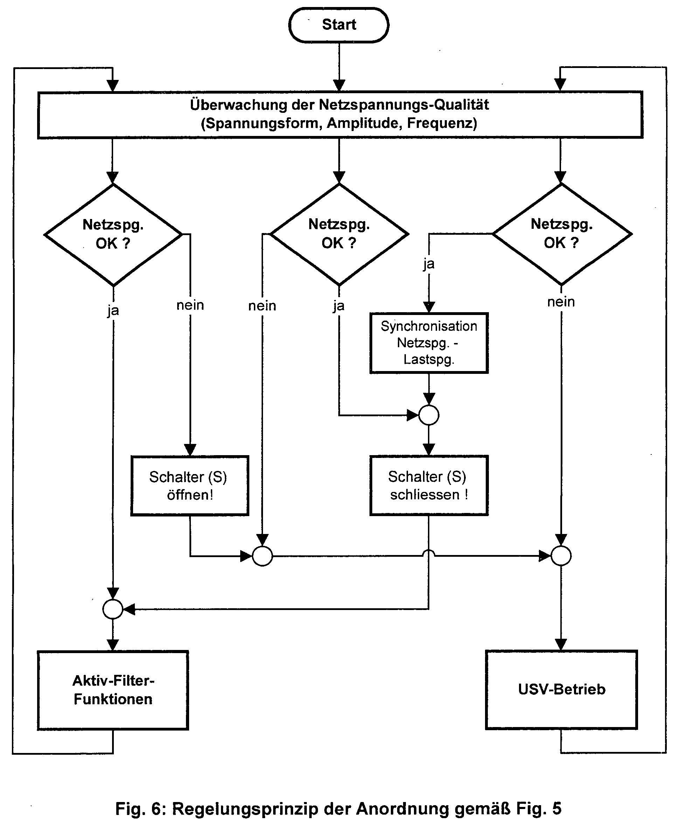

Fig. 6 zeigt das zugehörige Regelungsprinzip. Nach dem Einschalten (Start) wird zunächst die Netzspannung (Spannungsform, Amplitude, Frequenz) überprüft. Ist diese in Ordnung, wird der Schalter S geschlossen. Der erste Stromrichter SR_{PAR} arbeitet als paralleler Aktivfilter, der zweite Stromrichter SR_{SER} als serieller Aktivfilter. Solange die Netzspannung vorgegebene Gütekriterien erfüllt, arbeiten die Stromrichter als Aktivfilter.

Sobald die Netzspannung des versorgenden Netzes N1 die vorgegebenen Grenzen nicht mehr einhält, wird der Schalter S geöffnet und der erste Stromrichter SR_{PAR} versorgt das Teilnetz N2 aus dem Gleichspannungszwischenkreis G. Die Anordnung arbeitet im USV-Betrieb. Der Schalter S bleibt solange offen, bis das Netz N1 wieder die vorgegebenen Gütekriterien erfüllt.

Wenn das Netz N1 wieder die vorgegebenen Gütekriterien erfüllt, wird die Spannung des Teilnetzes N2 - die vom ersten Stromrichter SR_{PAR} erzeugt wird - so geregelt, daß sie gleich der Netzspannung des versorgenden Netzes ist. Anschliessend wird der Schalter S geschlossen. Der erste Stromrichter SR_{PAR} arbeitet als paralleler Aktivfilter, der zweite Stromrichter SR_{SER} als serieller Aktivfilter. Solange die Netzspannung vorgegebene Gütekriterien erfüllt, arbeiten die Stromrichter als Aktivfilter.

Mit der Regelung R werden somit folgende Funktionen realisiert:
- Überwachung der Netzspannung U_{NETZ}.
- Ansteuerung des Schalters S :
   Öffnen des Schalters wenn die Netzspannung eine definierte Qualität Spannungsform, Spannungsamplitude, Frequenz) nicht erfüllt;
   Schließen des Schalters wenn die Netzspannung eine definierte Qualität (Spannungsform, Spannungsamplitude, Frequenz) erfüllt.
- Einspeisung von Wirkleistung aus dem Gleichspannungs-Zwischenkreis G in das Wechselspannungsnetz über den ersten Stromrichter SR_{PAR}.
- Einspeisung von Blindleistung in das Wechselspannungsnetz über den ersten Stromrichter SR_{PAR} zur Blindleistungskompensation.
- Einspeisung von harmonischen Strömen in das Wechselspannunsnetz über den ersten Stromrichter SR_{PAR} zur aktiven Filterung von Oberschwingungs-Strömen.
- Verbesserung der Lastspannung U_{LAST} der Last L in Amplitude und Spannungsform durch Überlagerung einer Filter-Wechselspannung U_{F} auf die Netzspannung U_{NETZ}.
- Erzeugung der Filter-Wechselspannung U_{F} durch den zweiten Stromrichter SR_{SER} und den Ankoppeltransformator T.
- Regelung der Zwischenkreisspannung über den ersten Stromrichter SR_{PAR} bei geschlossenem Schalter S.
- Überwachung des Ladezustandes und Laden des oder der Energiespeicher ES im Gleichspannungszwischenkreis G über den ersten Stromrichter SR_{PAR} bei geschlossenem Schalter S.
- Versorgung der Last L über den ersten Stromrichter SR_{PAR} wenn der Schalter S geöffnet ist.
- Übernahme sämtlicher Schutz-, Steuerungs- und Regelungsaufgaben, die zum Betrieb der Anlage als kombiniertes Aktivfilter-USV-System notwendig sind durch die Regelung R.

Die erfindungsgemäße Anordnung wirkt somit als Kombination aus "Aktivfilter" und "unterbrechungsfreie Stromversorgung".

Solange der Schalter S geschlossen ist (= Netzspannung in Ordnung) können Oberschwingungsströme und Blindleistung der Last L sowie weiteren Lasten im speisenden Wechselstromnetz N1 kompensiert werden. Weiterhin wird die Zwischenkreisspannung geregelt, die Ladung der Energiespeicher ES im Zwischenkreis wird durchgeführt, sowie Energie aus den Energieerzeugern EE im Zwischenkreis in das Wechselstromnetz eingespeist. Diese Aufgaben übernimmt der erste Stromrichter SR_{PAR}.

Der zweite Stromrichter SR_{SER} überlagert der Netzspannung U_{NETZ} über den Ankoppeltransformator eine Spannung U_{F}, so dass die Störungen der Netzspannung (Amplitude, Spannungsform) korrigiert werden und die USV-Last mit einer störungsfreien Spannung versorgt wird.

Wenn der Schalter S aufgrund einer sehr schlechten Netzspannungs-Qualität (Netzausfall, sehr niedrige Amplitude der Netzspannung) geöffnet ist, erzeugt der erste Stromrichter die Wechselspannung für die Last. Der zweite Stromrichter SR_{SER} übernimmt dann nur bei Bedarf die Korrektur der Ausgangsspannung des ersten Stromrichters SR_{PAR}.

Die Zwischenkreisspannung wird in diesem Falle durch Einsatz der Energiespeicher ES und Energieerzeuger EE im Zwischenkreis G geregelt.

Eine geeignete Struktur der Regelung ist Fig. 6 zu entnehmen.

Die erfindungsgemäße Anordnung kann, abhängig von der Netzform des speisenden Netzes und der zur Verfügung stehenden Energiespeicher und/oder Energieerzeuger in folgenden Varianten ausgeführt werden:

| **Nr.** | **Netzform** | **Ausführung von SR**_{**PAR**} | **Ausführung von SR**_{**SER**} **/T** | **Gleichspannungszwischenkreis** |
|---|---|---|---|---|
| 1a | 1~ + N | 2~ | 2~ / 1~ | nur Energiespeicher im Zwischenkreis |
| 1b | 1~ + N | 2~ | 2~ / 1~ | nur Energieerzeuger im Zwischenkreis |
| 1c | 1~ + N | 2~ | 2~ / 1~ | Energiespeicher und Energieerzeuger im Zwischenkreis |
| 2a | 3~ | 3~ | 3~ / 3~ | nur Energiespeicher im Zwischenkreis |
| 2b | 3~ | 3~ | 3~ / 3~ | nur Energieerzeuger im Zwischenkreis |
| 2c | 3~ | 3~ | 3~ / 3~ | Energiespeicher und Energieerzeuger im Zwischenkreis |
| 3a | 3~ + N | 3~ + N | 3~ / 3~ | nur Energiespeicher im Zwischenkreis |
| 3b | 3~ + N | 3~ + N | 3~ / 3~ | nur Energieerzeuger im Zwischenkreis |
| 3c | 3~ + N | 3~ + N | 3~ / 3~ | Energiespeicher und Energieerzeuger im Zwischenkreis |

## Patentansprüche

1. Einrichtung zur unterbrechungsfreien Stromversorgung von elektrischen Lasten (L) und zur Aktivfilterung, wobei
a) die Lasten (L) an einem Wechselspannungs-Teilnetz (N2) angeschlossen sind, das mittels eines Schalters (S) und über eine dazu in Reihe geschaltete Primärwicklung (PW) eines Ankoppeltransformators (T) mit einem speisenden Wechselspannungsnetz (N1) verbunden ist,
b) am Wechselspannungs-Teilnetz (N2) an einem Anschlusspunkt (A) zwischen dem Schalter (S) und der Primärwicklung (PW) des Ankoppeltransformators (T) die Wechselspannungsseite eines ersten Stromrichters (SR_{PAR}) netzparallel angeschlossen ist,
c) an der Sekundärwicklung (SW) des Ankoppeltransformators (T) ein zweiter Stromrichter (SR_{SER}) mit seiner Wechselspannungsseite angeschlossen ist,
d) die beiden Stromrichter (SR_{PAR}, SR_{SER}) gleichspannungsseitig an einem Gleichspannungszwischenkreis (G) angeschlossen sind, und
e) an die Stromrichter (SR_{PAR}, SR_{SER}) gleichspannungsseitig wenigstens ein Energiespeicher (ES) und/oder wenigstens ein Energieerzeuger (EE) angeschlossen sind.

2. Einrichtung nach Anspruch 1, **dadurch gekennzeichnet, daß** eine Regeleinrichtung (R) vorhanden ist, die mindestens eine der nachstehenden Funktionen ermöglicht:
a) Überwachung der Netzspannung (U_{NETZ}),
b) Ansteuerung des Schalters (S),
c) Einspeisung von Wirkleistung aus dem Gleichspannungs-Zwischenkreis (G) in das Wechselspannungs-Teilnetz (N2) über den ersten Stromrichter (SR_{PAR}),
d) Einspeisung von Blindleistung in das Wechselspannungs-Teilnetz (N2) über den ersten Stromrichter (SR_{PAR}) zur Blindleistungskompensation,
e) Einspeisung von harmonischen Strömen in das Wechselspannungs-Teilnetz (N2) über den ersten Stromrichter (SR_{PAR}) zur aktiven Filterung von Oberschwingungs-Strömen,
f) Verbesserung der Lastspannung (U_{LAST}) der Last (L) in Amplitude und Spannungsform durch Überlagerung einer Filter-Wechselspannung (U_{F}) auf die Netzspannung (U_{NETZ}),
g) Erzeugung der Filter-Wechselspannung (U_{F}) mittels des zweiten Stromrichters (SR_{SER}) und des Ankoppeltransformators (T),
h) Regelung der Zwischenkreisspannung des Gleichspannungs-Zwischenkreises (G) mittels des ersten Stromrichters (SR_{PAR}) bei geschlossenem Schalter (S),
i) Überwachung des Ladezustandes und Laden der Energiespeicher (ES) im Gleichspannungszwischenkreis (G) mittels des ersten Stromrichters (SR_{PAR}) bei geschlossenem Schalter (S),
j) Versorgung der Last (L) über den ersten Stromrichter (SR_{PAR}) wenn der Schalter (S) geöffnet ist,
k) Übernahme sämtlicher Schutz-, Steuerungs- und Regelungsaufgaben, die zum Betrieb der Anlage als kombiniertes Aktivfilter-USV-System notwendig sind.

3. Einrichtung nach Anspruch 1 oder 2, **dadurch gekennzeichnet, daß** der erste Stromrichter (SR_{PAR}) unter Zwischenschaltung eines Transformators (T2) angeschlossen ist.
